Europäisches Patentamt

European Patent Office

Office européen des brevets

(11) Publication number: **0 278 488 B1**

(12) **EUROPEAN PATENT SPECIFICATION**

(45) Date of publication of patent specification: **31.07.91**   (51) Int. Cl.5: **B62D 35/00**

(21) Application number: **88101937.6**

(22) Date of filing: **10.02.88**

(54) Air spoiler.

(30) Priority: **13.02.87 JP 20307/87**

(43) Date of publication of application:
**17.08.88 Bulletin 88/33**

(45) Publication of the grant of the patent:
**31.07.91 Bulletin 91/31**

(84) Designated Contracting States:
**DE FR GB IT**

(56) References cited:
**GB-A- 2 142 287**

**PATENT ABSTRACTS OF JAPAN, vol. 9, no.
198 (M-404)[1921], 15th August 1985; & JP-
A-60 61 377 (TOYODA GOSEI K.K.) 09-04-1985**

(73) Proprietor: **INOAC CORPORATION
2-13-4, Meieki-minami Nakamura-ku
Nagoya-shi Aichi-ken(JP)**

(72) Inventor: **Fuji, Hiroshi c/o INOUE MTP
KABUSHIKI KAISHA
Anjo Plant 3-1-36, Imaike-cho
Anjo-shi Aichi-ken(JP)**
Inventor: **Teranishi, Akinori c/o INOUE MTP
KABUSHIKI KAISHA
Anjo Plant 3-1-36, Imaike-cho
Anjo-shi Aichi-ken(JP)**
Inventor: **Kozaki, Norio c/o INOUE MTP
KABUSHIKI KAISHA
Anjo Plant 3-1-36, Imaike-cho
Anjo-shi Aichi-ken(JP)**
Inventor: **Sugiura, Toshimitsu c/o INOUE MTP
KABUSHIKI KAISHA
Anjo Plant 3-1-36, Imaike-cho
Anjo-shi Aichi-ken(JP)**

(74) Representative: **Eisenführ, Speiser & Strasse
Martinistrasse 24
W-2800 Bremen 1(DE)**

## Description

### BACKGROUND OF THE INVENTION

#### Field of the Invention

This invention relates to an air spoiler mounted on the rear deck lid of a vehicle so as to enhance the stability of a vehicle.

#### Prior Art

As the speed of a vehicle increases, the vehicle tends to lift from the surface of the road, thus the controllability of the vehicle deteriorates.

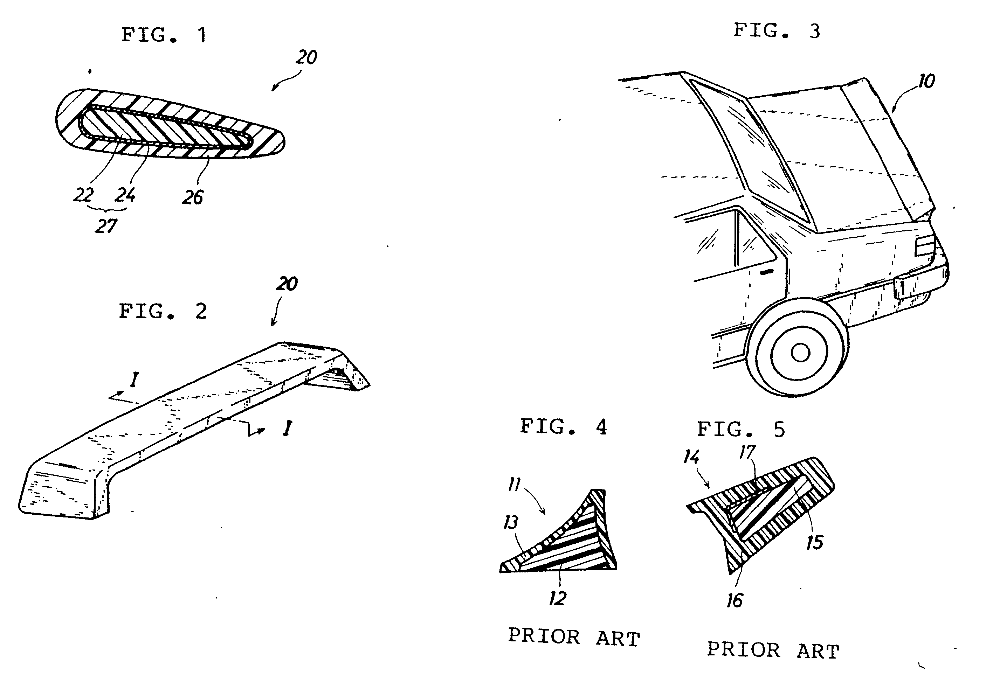

In order to solve this problem, an air spoiler 10 as shown in Fig. 3 is mounted on the upper surface at the extreme rear of the trunk lid of a vehicle. This air spoiler provides a downward force to the vehicle when the vehicle is operated at a relative fast speed as air, when passing over the vehicle, front to rear, comes into contact with this air spoiler, thus providing greater stability.

To enhance fuel economy, it is desirable that a vehicle is kept as light weight as possible therefore it is indispensable that an air spoiler is also constructed of light weight materials.

As prior art, an air spoiler made of foamed material having a low density has been disclosed in Japan published unexamined utility model applications No.60-6685 and No.61-12885. Fig. 4 is a cross section of the former example of an air spoiler 11 which comprises a core body 12 made of low density foamed material and a polyurethane foam 13 covering the core body 12. Fig. 5 is a cross section of the latter example of an air spoiler 14 which comprises a core body 15 made of a low density foamed material, a resin outer layer 16 and a metal reinforcing member 17 between the core body 15 and the resin outer layer 16.

Although the air spoiler 11 of the former prior art is light weight, the mechanical strength of the product is weak and the bond between the core body 12 and the outer layer (polyurethane foam) 13 is also weak. On the other hand, the latter prior art 14 has the mechanical strength, but the bond among members, especially between the core body 15 and the metal reinforcing member 17 is weak and the air spoiler 14 is not light weight. Moreover, in both prior art, the air spoilers are produced as follows. The core body and the metal reinforcing member is set at a center of a molding case. Then resin is injected into a molding case to constitute the outer layer. In this procedure, however, the injecting pressure can bring about deformation of the core body or biasing of the core body in the product. As a result, it was difficult to produce a good and stable quality air spoiler.

### SUMMARY OF THE INVENTION

In the present invention, an air spoiler is provided which avoids all of the above-noted problems.

Objects of the present invention are to provide a good quality, light weight air spoiler with high mechanical strength.

Other objects and advantages of the present invention will become apparent from the detailed description to follow.

The air spoiler of the present invention is a three-layer-composite which includes a core body made of foamed material, a solid thermosetting resin layer surrounding the core body and an outer layer made of synthetic resin covering the solid thermosetting resin layer. The core body made of foamed material is light weight, but does not have mechanical strength, on the other hand, the solid thermosetting resin layer has mechanical strength, therefore the core composite which is the foamed core body covered by the solid thermosetting resin layer has good mechanical strength. If the solid thermosetting resin layer includes reinforcing fibers, then the mechanical strength is further enhanced. Employing this type of construction provides greater strength with a reduced weight as metal used for strength is not required.

The solid thermosetting resin layer covering the core body is a shaped flat cylinder. That shape of flat cylinder further enhances the mechanical strength of the spoiler. When manufacturing an air spoiler, the core composite is set at the center of the mold and the solid thermosetting resin is injected around this cylinder. In this invention, as the core composite has a high mechanical strength, the product is not deformed or biased because of the injecting pressure, thus the quality of the air spoiler becomes stable.

The solid thermosetting resin layer has a much smoother surface and fewer air voids on the surface than the core body of the foamed material, thus when the raw material of the outer synthetic resin layer is injected into the mold, the raw material goes smoothly without making air bubbles along the solid thermosetting layer, thus preventing any deterioration of quality. As a result, a finished product has a fine appearance and good quality, the surface of which is smooth.

Furthermore, the solid thermosetting resin layer and the outer layer made of synthetic resin strongly adhere to each other. The bond among the core body, the solid thermosetting resin layer and the outer layer is strong, of good mechanical strength.

### BRIEF DESCRIPTION OF THE DRAWINGS

Fig. 1 and Fig. 2 relate to an embodiment of this invention.

Fig. 1 is a cross sectional view of a spoiler of Fig. 2 taken on line I-I;

Fig. 2 is a perspective view of an air spoiler;

Fig. 3 is a partial perspective view of the trunk of a vehicle; and

Fig. 4 and Fig. 5 are sectional views of prior art air spoilers.

## DETAILED DESCRIPTION OF PREFERRED EMBODIMENT

Set forth is an explanation of a preferred embodiment of the present invention based on the attached drawing.

This air spoiler 20 comprises three layers which are a core body 22 made of foamed material, a solid thermosetting resin layer 24 surrounding the core body 22 and an outer layer 26 made of synthetic resin covering the solid thermosetting resin layer 24. The core body 22 may be made of rigid polyurethane foam, polypropylene foam, polyethylene foam, polysthyrene foam, or polyethylene-polystylene copolymer foam having a density of 0.02 to 0.5 g/cm³.

The solid thermosetting resin layer 24 surrounding the core body 22 is shaped flat cylinder and may be made of epoxy resin, unsaturated polyester resin, polyurethane resin, or polyisocyaurate resin. The layer 24 may be reinforced by the fibers. As reinforcing fibers, glass fibers such as chopped strand fibers, continuous strand mat, non woven fabric mat or woven fabric mat are preferable. It is desirable that the solid thermosetting resin layer 24 have the thickness of 1 to 3 mm.

Rigid polyurethane foam, semi-rigid polyurethane foam with a rigid skin (integrally stiffened skin foam) or the like having a density of 0.4 to 1.0 g/cm³ is suitable for synthetic resin constituting the outer layer 26. The shape of an air spoiler is not limited to an example of this embodiment as shown in Figs.1 and 2. Any shape can be employed in accordance with the shape of the vehicle. For example, an air spoiler 10 shown in Fig. 3 can be made with the above inventive structure. In some cases, depending upon the shape of the vehicle, some fittings to the body (not shown) are mounted between the outer layer 26 and the solid thermosetting resin layer 24.

This type of air spoiler 20 is manufactured as follows: The core body 22 is formed by foamed material, the core body 22, made of foamed material, is put on a fiber mat laid on a first mold whose cavity is greater than the core body. After another fiber mat covers the core body 22, the first mold is closed, raw material for solid thermosetting resin layer 24 is injected and cured into the first mold. The core composite 27, which is the core body 22 covered by the fiber reinforced thermosetting resin layer 24, is demolded from the first mold and is set at a center of a second mold whose cavity is greater than the core composite 27. Raw material for synthetic resin layer 26 is injected and is cured into the second mold.

Obviously, many modifications and variations of the present invention are possible in the light of above teaching. It is therefore to be understood that within the scope of the appended claims, the invention may be practiced otherwise than as specifically described.

## Claims

1. An air spoiler (20) comprising:
    a core body (22) made of foamed material;
    a solid thermosetting resin layer (24) surrounding the core body; and
    an outer layer (26) made of synthetic resin and covering the solid thermosetting resin layer.

2. An air spoiler according to claim 1 wherein the solid thermosetting resin layer comprises reinforcing fibers.

3. An air spoiler according to claim 2 wherein the reinforcing fibers comprise chopped strand fibers, continuous strand mat, non woven fabric mat or woven fabric mat.

4. An air spoiler according to claim 3 wherein the thickness of the solid thermosetting resin layer is 1 to 3 mm.

5. An air spoiler according to claim 4 wherein the solid thermosetting resin layer is shaped flat cylinder.

6. An air spoiler according to claim 5 wherein the core body is made of rigid polyurethane foam, polypropylene foam, polyethylene foam, polystyrene foam or polyetylene-polystylene copolymer foam having a density of 0.02 to 0.5 g/cm³.

7. An air spoiler according to claim 6 wherein the solid thermosetting resin layer is made of epoxy resin, unsaturated polyester resin, polyurethane resin, or polyisocyanurate resin reinforced by the fibers.

8. An air spoiler according to claim 7 wherein the outer layer is made of rigid polyurethane foam having a density of 0.4 to 1.0 g/cm³ or semi-rigid polyurethane foam with a rigid skin.

**9.** A manufacturing method of an air spoiler comprising steps of:

preparing a core body from foamed material;

laying a fiber mat on a first mold whose cavity is greater than the core body by a predetermined thickness;

putting the core body on the fiber mat;

further laying a fiber mat on the core body;

closing the first mold;

injecting raw material of solid thermosetting resin into the first mold and curing the raw material;

demolding a core composite which is the core body covered by the fiber reinforced solid thermosetting resin from the first mold;

setting the core composite at a center of a second mold whose cavity is greater than the core composite by a predetermined thickness;

injecting raw material of synthetic resin in the second mold and curing the raw material.

**Revendications**

**1.** Déflecteur aérodynamique (20) comportant :
une âme (22) réalisée dans un matériau en mousse;
une couche de résine thermodurcissable solide (24) entourant l'âme; et
une couche extérieure (26) réalisée en résine synthétique et recouvrant la couche de résine thermodurcissable solide.

**2.** Déflecteur aérodynamique selon la revendication 1, dans lequel la couche de résine thermodurcissable solide comporte des fibres de renforcement.

**3.** Déflecteur aérodynamique selon la revendication 2, dans lequel les fibres de renforcement comprennent des fibres découpées, un mat de fil continu, un mat en non tissé ou un mat en tissu.

**4.** Déflecteur aérodynamique selon la revendication 3, dans lequel l'épaisseur de la couche de résine thermodurcissable solide est de 1 à 3 mm.

**5.** Déflecteur aérodynamique selon la revendication 4, dans lequel la couche de résine thermodurcissable solide est en forme de cylindre plat.

**6.** Déflecteur aérodynamique selon la revendication 1, dans lequel l'âme est réalisée en mousse de polyuréthanne, en mousse de polypropylène, en mousse de polyéthylène, en mousse de polystyrène ou en mousse de copolymère de polyéthylène-polystyrène rigide ayant une densité de 0,02 à 0,5 g/cm$^3$.

**7.** Déflecteur aérodynamique selon la revendication 6, dans lequel la couche de résine thermodurcissable solide est réalisée en résine époxy, en résine polyester non saturée, en résine de polyuréthanne ou en résine de polyisocyanurate renforcée par les fibres.

**8.** Déflecteur aérodynamique selon la revendication 1, dans lequel la couche extérieure est réalisée en mousse de polyuréthanne rigide ayant une densité de 0,4 à 1 g/cm$^3$ ou en mousse de polyuréthanne semi-rigide avec une peau rigide.

**9.** Procédé de fabrication d'un déflecteur aérodynamique comportant les étapes de :
préparation d'une âme à partir d'un matériau en mousse;
pose d'un mat de fibres sur un premier moule dont la cavité est plus grande que l'âme d'une épaisseur prédéterminée;
mise en place de l'âme sur le mat de fibres;
pose de nouveau d'un mat de fibres sur l'âme;
fermeture du premier moule;
injection de la matière de base de la résine thermodurcissable solide dans le premier moule et durcissement de la matière de base;
démoulage d'un composite d'âme qui est l'âme recouverte par la résine thermodurcissable solide renforcée de fibres du premier moule;
mise en place du composite d'âme au centre d'un deuxième moule dont la cavité est plus grande que le composite d'âme d'une épaisseur prédéterminée;
injection de la matière de base de la résine synthétique dans le deuxième moule et durcissement de la matière de base.

**Patentansprüche**

**1.** Luftspoiler (20) mit:
einem Kern (22) aus geschäumtem Material;
mit einer den Kern umgebenden, festen, hitzehärtbaren Harzschicht (24); und
einer aus Kunstharz hergestellten und die feste hitzehärtbare Harzschicht bedeckenden Außenschicht (26).

**2.** Luftspoiler nach Anspruch 1, bei welchem die feste hitzehärtbare Harzschicht Verstärkungsfasern enthält.

3. Luftspoiler nach Anspruch 2, bei welchem die Verstärkungsfasern Glasfasern, eine kontinuierliche Glasseidenmatte, eine nichtgewebte Textilmatte oder eine gewebte Textilmatte aufweisen.

4. Luftspoiler nach Anspruch 3, bei welchem die Dicke der festen hitzehärtbaren Harzschicht zwischen 1 und 3 mm liegt.

5. Luftspoiler nach Anspruch 4, bei welchem die feste hitzehärtbare Harzschicht die Form eines abgeflachten Zylinders besitzt.

6. Luftspoiler nach Anspruch 5, bei welchem der Kern aus hartem Polyurethanschaum, Polypropylenschaum, Polyethylenschaum, Polystyrolschaum oder Polyethylen-Polystylen-Copolymer-Schaum mit einer Dichte von 0,02 bis 0,5 $g/cm^3$ hergestellt ist.

7. Luftspoiler nach Anspruch 6, bei welchem die feste, hitzehärtbare Harzschicht aus Epoxidharz, ungesättigtem Polyesterharz, Polyurethanharz oder Polyisocyanurate, verstärkt durch die Fasern, besteht.

8. Luftspoiler nach Anspruch 7, bei welchem die Außenschicht aus hartem Polyurethanschaum mit einer Dichte von 0,4 bis 1,0 $g/cm^3$ oder aus halbhartem Polyurethanschaum mit harter Haut besteht.

9. Herstellungsverfahren für einen Luftspoiler, mit den Schritten:
einen Kern aus geschäumtem Material vorzubereiten;
eine Fasermatte in eine erste Form zu legen, dessen Hohlraum um eine bestimmte Dicke größer als der Kern ist;
den Kern auf die Fasermatte zu legen;
außerdem eine Fasermatte auf den Kern zu legen;
die erste Form zu schließen;
Rohmaterial aus festem, hitzehärtbarem Harz in die erste Form einzuspritzen und das Rohmaterial zu härten;
ein Kernverbundteil, bei dem es sich um den vom faserverstärktem, festen, hitzehärtbaren Harz bedeckten Kern handelt, aus der ersten Form herauszunehmen;
das Kernverbundteil in die Mitte einer zweiten Form zu setzen, deren Hohlraum um eine bestimmte Dicke größer als das Kernverbundteil ist;
Rohmaterial aus Kunstharz in die zweite Form einzuspritzen und das Rohmaterial zu härten.

FIG. 1

20

22 24 26

27

FIG. 2

20

I

I

FIG. 3

10

FIG. 4

11

13

12

PRIOR ART

FIG. 5

14 17

15

16

PRIOR ART

EP 0 278 488 B1